# EUROPEAN PATENT SPECIFICATION

(11) **EP 0 774 209 B1**
(45) Date of publication and mention of the grant of the patent: **17.07.2002**
(21) Application number: 96203195.1
(22) Date of filing: 15.11.1996
(51) Int. Cl.: A23G 1/20, A23G 1/00, A23G 1/21, A23G 3/20

(54) **Chocolate container with at least one sealed edge**
Schokolade-Behälter mit wenigstens einer abgedichteten Kante
Récipient en chocolat avec au moins un bord scellé

(30) Priority: 20.11.1995 GB 9523681; 23.07.1996 GB 9615405
(43) Date of publication of application: 21.05.1997
(73) Proprietor: SOCIETE DES PRODUITS NESTLE S.A., 1800 Vevey (CH)
(72) Inventor: Jury, Mark, Thirsk, North Yorkshire Y07 2PH (GB)
(74) Representative: Pate, Frederick George

(56) References cited:
- EP-A- 0 164 234
- EP-A- 0 307 614
- EP-A- 0 434 238
- EP-A- 0 601 194
- EP-A- 0 603 467
- EP-A- 0 730 827
- WO-A-82/00082
- CH-A- 106 205
- DE-C- 145 517
- FR-A- 643 995
- FR-A- 2 118 768
- GB-A- 860 666
- GB-A- 2 270 828
- US-A- 1 649 307
- US-A- 1 649 308
- US-A- 2 355 915
- US-A- 2 563 278
- US-A- 2 613 488
- US-A- 3 356 044
- 'ENCYCLOPAEDIA BRITANNICA, 15TH EDITION', 1992, ENCYCLOPAEDIA BRITANNICA, INC., CHICAGO Vol. 19, pages 382-384 and 394
- PARKER, SYBIL P. (EDITOR): "McGraw-Hill Dictionary of Engineering", 1984, MCGRAW-HILL, NEW YORK * page 146 *

## Description

The present invention relates to new chocolate products, more particularly to chocolate bags, pouches or similar containers having one or more sealed edges which may or may not contain a filling.

It is difficult to close the ends of solid tubular chocolate to form a bag or container by squeezing together to form a crimp-seal because the tube breaks before obtaining a seal owing to the brittleness of the chocolate. Therefore chocolate bags, pouches or similar containers having one or more crimp-sealed edges do not exist.

US-A-3 356 044 describes a fold-over pie-forming unit.

EP-A-0 434 238 and EP-A-0 397 614 relate to the crimping of dough products.

WO 82 00082 A discloses a method and apparatus for forming objects of a soft mass, particularly filled candies, chewing gum or the like, in which a rope of material, possibly provided with a soft or liquid filling, is subdivided by squeezing into a first still cohesive chain of objects which are subsequently completely separated.

CH 106 205 A discloses an extruded chocolate tube which leaves the extruder at a temperature which allows it to conserve its shape and which is afterwards sealed at each end by plugs.

In our co-pending EP-A-0603467, a method is described for the cold extrusion of chocolate or a fat-containing confectionery material in a solid or semi-solid non-pourable form whereby the extruded product has a temporary flexibility or plasticity enabling it to be physically manipulated or plastically deformed, e.g. it can be bent, twisted or forced into a mould. The extruded material is a solid or semi-solid product and may be a hollow profiled product such as a tube.

We have found that a chocolate bag, pouch or similar container having one or more sealed edges can be formed by crimping a temporarily flexible hollow profiled product such as a tube produced by the process described in our co-pending EP-A-0603467.

Accordingly, the present invention provides a bag, pouch or similar container having one or more crimp-sealed edges characterised in that it is made from a chocolate or chocolate substitute.

The bag, pouch or similar container may, for instance, have the shape of a pillow or a polyhedron such as a tetrahedron. It may be completely enclosed or open at one or more parts of the edge. It may or may not contain a filling. The filling may be solid or liquid and may be edible or non-edible. Examples of edible fillings are fondant, rice crispies, mousse, praline, marshmallow, gummy novelty shapes, or a chocolate or fat-containing confectionery material which may differ visually or texturally from the chocolate or chocolate substitute of the bag, pouch or similar container. An example of a non-edible filling is a novelty plastic toy.

The length of the bag, pouch or similar container may be from 10 to 1000mm, preferably from 20 to 250mm and more usually from 25 to 100mm. The width of the bag, pouch or similar container may be from 5 to 100mm, preferably from 10 to 50mm and more usually from 15 to 35mm. The thickness of the wall of the bag, pouch or similar container may be from 0.25 to 10mm, preferably from 0.5 to 5mm and more usually from 0.75 to 2.5mm.

The chocolate may be dark, milk or white chocolate. Chocolate substitutes are well-known to those skilled in the art. Chocolate substitutes contain direct cocoa butter replacements, stearines, coconut oil, palm oil, butter, or any mixture thereof.

The present invention also provides a process of producing a bag, pouch or similar container having one or more sealed edges made of a chocolate or chocolate substitute which comprises extruding a chocolate or chocolate substitute in a hollow or sheet form through a die at a temperature at which the chocolate or chocolate substitute is in a solid or semi-solid non-pourable or non-flowable form throughout the extrusion and whereby the extruded product has a temporary flexibility or plasticity characterised in that during the period of temporary flexibility, the extruded chocolate or chocolate substitute is crimped by pinching or pressing the sides of a hollow profiled extruded product transversely to its longitudinal axis to form crimped united edges, pinching or pressing the adjoining edges of two parallel sheets of extruded product or pinching or pressing the adjoining edges of a folded sheet of extruded product.

If the adjacent edges of two temporarily flexible substantially parallel sheets of square or rectangular shape are crimped, two, three or four edges may be crimped together. Advantageously, the two sheets may have different colours or flavours.

The shape of a product formed by pinching or pressing the adjoining edges of a folded sheet of extruded product is analogous to ravioli.

Preferably, the temporarily flexible sheet or hollow profiled product made of chocolate, or chocolate substitute is obtained by an extrusion process, especially by extruding the chocolate, or chocolate substitute material through a suitable die at a temperature at which the chocolate, or chocolate substitute is in a solid or semi-solid non-pourable or non-flowable form throughout the extrusion to produce a product having a temporary flexibility or plasticity, e.g. for up to 4 hours, e.g. from 1 minute to 2 hours. Full details of this process are described in our co-pending EP-A-0603467 where it is explained that the temporary flexibility is dependent on the extrusion conditions and the chocolate ingredients.

The crimping of the edges of the temporarily flexible sheet or hollow profiled product may be carried out by conventional means, e.g. by pinching or pressing the edges together to unite them. For pinching or pressing the edges together, one or more pairs of cooperating jaws or rotating wheels made of metal or plastics may be used. The jaws may be mounted on a pair of scissor arms wich are shut by actuators to pinch the opposite sides of the tubing together to unite the edges. Alternatively, the jaws may be operated by cams which rotate and snap the opposing jaws together to unite the edges. Preferably, the temporarily flexible sheet or hollow profiled product is stationary relative to the jaws during the pinch using these methods. Another method for crimping the edges of the temporarily flexible sheet or hollow profiled product may be carried out by two jaws mounted on counter rotating wheels driven at the same speed such that the point of closest proximity of the jaws moves at the same speed as the chocolate extrusion to form the crimp. A further method for crimping the edges of the temporarily flexible hollow profiled product may be carried out by using, instead of two jaws pinching the tube, two small rollers which are pushed into opposite sides of the tube or by passing through the nip of a pair of counter-rotating wheels.

For making a pillow shaped container, one end of a temporarily flexible hollow profiled product may be crimped to unite the edges of that end, a filling may optionally be introduced and then the other end may optionally be crimped to unite the edges of that other end. The filling may be introduced by co-extrusion or by subsequent introduction.

For making a tetrahedron shaped container, one end of a temporarily flexible hollow profiled product may be crimped to unite the edges of that end, a filling may optionally be introduced and then the other end may optionally be crimped to unite the edges of that other end at an angle of 90° to the first crimped joint.

The filling may be introduced into the temporarily flexible hollow profiled product by the following methods:
i) an indexed feed method in which a measured amount of filling is injected via the open end of a small section of the temporarily flexible hollow profiled product. By this method, almost any type of filling may be introduced.
ii) A continuous co-extrusion method in which the temporarily flexible hollow profiled product is continuously filled as it is extruded. When this method is used, any crimping and cutting will be of a filled tube.

Desirably, the pinching action not only unites the edges of the finished product but also chops it off. This may be achieved by a guillotine method in which opposed blades pass in scissor fashion and hence cut through the product,or by a method where the opposed blades meet at a point, or by a closed crimp method in which two rollers are pushed into temporarily flexible hollow profiled product until they meet to cause separation.

If necessary, the united edges may be sealed with liquid chocolate.

The present invention will now be further illustrated by way of example only with reference to the accompanying drawings in which
Figure 1 represents the steps of an indexed manufacture,
Figure 2 represents the steps of a cam/crimp manufacture, and
Figure 3 represents the steps of a rotating wheel manufacture.

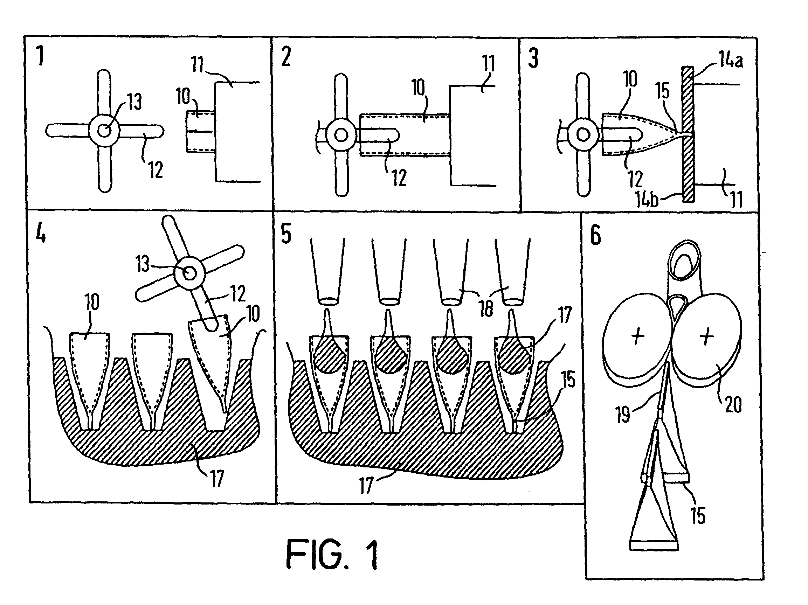

Referring to Figure 1, stage (1) shows a section of solid chocolate tubing 10 being extruded through the die 11. Stage (2) shows the tubing 10, as it approaches the desired length, sliding over a small bar 12 positioned on an indexed wheel 13. When the tube is exactly the right length stage (3) shows two jaws 14a, 14b, crimping and cutting the tube 10 in one action to give a seal 15. Stage (4) shows the indexed wheel 13 rotating through 90°causing the cut and crimped length of tubing 10 to fall off the bar 12 onto a conveyor 16. Stage (5) shows four cut and crimped lengths of tubing 10 being filled simultaneously with a praline filling 17 in the exact amount desired by four nozzle injectors 18. Stage (6) shows the final seal 19 being performed by a pair of rotating wheels 20 which crimp the top edge.

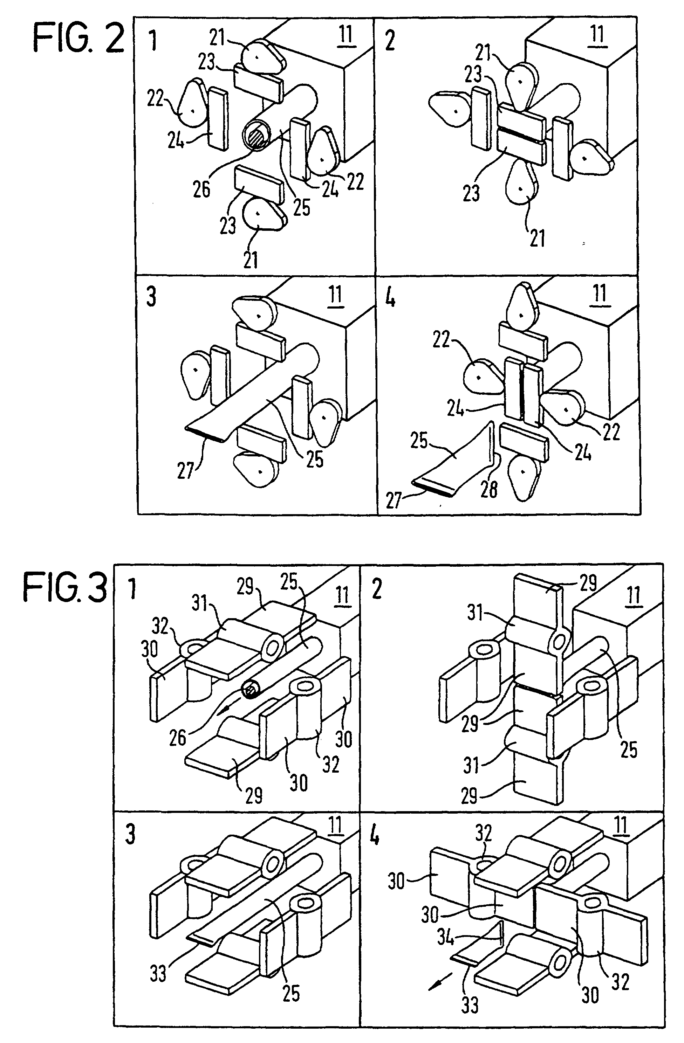

Referring to Figure 2, stage (1) shows two sets of opposed cams 21, 22 positioned to control the motion of two sets of jaws 23, 24, one set being at 90° to the other. A continuous tube of chocolate 25 is extruded through an extruder die 11 and a praline filling 26 is pumped into the chocolate tube. In stage (2), the first set of jaws 23, operated by the first set of cams 21, is pushed into the side of the tube sealing the end 27 (shown in stage 3) where the cams 21 rotate causing the jaws 23 to retract and allow the required length of chocolate tubing 25 with its sealed end 27 to be extruded. Stage (4) shows the other set of jaws 24, operated by the other set of cams 22, pushing into the tube 25 to produce a second seal 28 at 90° to the first seal 27. Both sets of jaws contain a blade along their centres such that the pinching action not only seals the product but also chops it off and makes the first seal of the following product.

Referring to Figure 3, stage (1) shows two sets of jaws 29, 30 mounted on two sets of wheels 31, 32 and a length of chocolate tubing 25 with a fondant filling 26 already inside being extruded continuously through a die 11. The wheels rotate at the same peripheral speed as the moving extruded chocolate tubing. Stage (2) shows the first set of jaws 29 rotating on the first set of wheels 31 at such a speed that the end point of the jaws moves with the tubing and does not scuff the surface while pinching the tubing 25 to make the first seal 33 as in stage (3) where the tubing is allowed to extrude further to the required length. In stage (4) the second set of jaws 30 rotating on the second set of wheels 32 at such a speed that the end point of the jaws moves with the tubing and does not scuff the surface while pinching the tubing 25 to make the second seal 34 at 90° to the first seal 33. Both sets of jaws contain a blade along their centres such that the pinching action not only seals the product but also chops it off and makes the first seal of the following product.

## Claims

1. A bag, pouch or similar container having one or more crimp-sealed edges (15, 27, 33) **characterised in that** it is made from a chocolate or chocolate substitute.

2. A bag, pouch or similar container according to claim 1 **characterised in that** it has the shape of a pillow or a polyhedron.

3. A bag, pouch or similar container according to claim 1 **characterised in that** the length is from 10 to 1000mm, the width is from 5 to 100mm, and the thickness of the wall is from 0.25 to 10mm.

4. A process of producing a bag, pouch or similar container having one or more crimp-sealed edges (15, 27, 33) made of a chocolate or chocolate substitute which comprises extruding a chocolate or chocolate substitute in a hollow or sheet form (10,25) through a die (11) at a temperature at which the chocolate or chocolate substitute (10, 25) is in a solid or semi-solid non-pourable or non-flowable form throughout the extrusion and whereby the extruded product has a temporary flexibility or plasticity **characterised in that** during the period of temporary flexibility, the extruded chocolate or chocolate substitute (10, 25) is crimp-sealed by pinching or pressing the sides of a hollow profiled extruded product transversely to its longitudinal axis to form crimped united edges (15, 27, 33) or pinching or pressing the adjoining edges of two parallel sheets of extruded product or pinching or pressing the adjoining edges of a folded sheet of extruded product.

5. A process according to claim 4 **characterised in that** one end of a temporarily flexible hollow profiled extruded (10, 25) product is crimped to unite the edges (15) of that end, a filling (17) is introduced and then the other end is crimped to unite the edges (19) of that other end to give a pillow shaped container (10).

6. A process according to claim 5 **characterised in that** the filling is introduced by an indexed feed method in which a measured amount of filling (17)is injected via the open end of a small section of the temporarily flexible hollow profiled product (10, 25).

7. A process according to claim 6 **characterised in that** a bar (12) positioned on an indexed wheel is introduced into the hollow product (10, 25) as it is being extruded which, when it reaches exactly the right length is crimped and cut at its upstream end to give a seal (15), the indexed wheel rotates 90° whose bar positioned thereon causes the cut and crimped length of hollow product (10) to rotate and fall off the bar onto a conveyor (16) with its open end facing upwards, whereupon the hollow product is filled with the filling (17) and then crimped at its top edge to give a seal(19).

8. A process according to claim 5 **characterised in that** the filling is introduced by a continuous co-extrusion method in which the temporarily flexible hollow profiled product (10, 25) is continuously filled as it is extruded.

9. A process according to claim 4 **characterised in that** the pressing or pinching action of the temporarily flexible hollow profiled extruded product (10, 25) not only unites the edges (15, 27, 33) of the finished product but also chops it off.

10. A process according to claim 9 **characterised in that** the pressing or pinching action is achieved by a guillotine method in which opposed blades pass in scissor fashion and hence cut through the product (10, 25).

11. A process according to claim 10 **characterised in that** the pressing or pinching action is achieved by a method where the opposed blades meet at a point.

12. A process according to claim 9 **characterised in that** the pressing or pinching action is achieved by a closed crimp method in which two rollers are pushed into temporarily flexible hollow profiled product (10, 25) until they meet to cause separation.

13. A process according to claim 4 **characterised in that** one end of a temporarily flexible hollow profiled extruded product (10, 25) is crimped to unite the edges (27, 33) of that end, a filling is introduced and then the other end (28, 34) is crimped to unite the edges of that other end at an angle of 90° to the first crimped joint to give a tetrahedron shaped container (25).

14. A process according to claim 13 **characterised in that** the crimping of the two ends of the extruded product (10, 25) is carried out by two sets of jaws (23, 24, 29, 30) one set positioned at right angles to the other set.

15. A process according to claim 4 **characterised in that** the united edges (15, 16, 27, 28, 33, 34) of the temporarily flexible sheet or hollow profiled product (10, 25) are sealed with liquid chocolate.

## Patentansprüche

1. Beutel, Säckchen oder vergleichbarer Behälter mit einer oder mehreren durch Zusammenpressen verschlossenen Kanten (15, 27, 33) **dadurch gekennzeichnet, daß** er aus Schokolade oder einem Schokoladen-Ersatz besteht.

2. Beutel, Säckchen oder vergleichbarer Behälter nach Anspruch 1, **dadurch gekennzeichnet, daß** er die Form eines Kissens oder eines Polyeders aufweist.

3. Beutel, Säckchen oder vergleichbarer Behälter nach Anspruch 1, **dadurch gekennzeichnet, daß** die Länge von 10 bis 1000 mm, die Weite von 5 bis 100 mm und die Dicke der Wandung von 0.25 bis 10 mm beträgt.

4. Verfahren zur Herstellung eines Beutels, Säckchens oder vergleichbaren Behälters mit einem oder mehreren durch Zusammenpressen verschlossenen Kanten (15, 27, 33) aus Schokolade oder einem Schokoladen-Ersatz, welches umfasst, Extrudieren einer Schokolade oder eines Schokoladen-Ersatzes in hohler oder Lagen-Form (10, 25) durch eine Düse (11) bei einer Temperatur, bei der die Schokolade oder der Schokoladen-Ersatz (10, 25) während der Extrusion in einer festen oder halb-festen, nicht gießbaren oder nicht strömungsfähigen Form vorliegt, wobei das extrudierte Produkt eine temporäre Flexibilität oder Plastizität aufweist, **dadurch gekennzeichnet, daß** die extrudierte Schokolade oder der extrudierte Schokoladenersatz (10, 25) während der Zeitspanne der temporären Flexibilität durch Drücken oder Pressen der Seiten eines einen Hohlraum aufweisenden extrudierten Produktes transversal zur Längsachse unter Bildung von zusammegepresst-vereinigten Enden (15, 27, 33) durch Zusammenpressen verschlossen werden, oder indem die nebeneinanderliegenden Kanten (15, 27, 33) von zwei paralell angeordneten Lagen von extrudiertem Produkt gedrückt oder gepresst werden, oder indem die benachbarten Kanten einer gefalteten Lage von extrudiertem Produkt gedrückt oder gepresst werden.

5. Verfahren nach Anspruch 4, **dadurch gekennzeichnet, daß** ein Ende eines temporär flexiblen extrudierten Produkts mit einem Hohlraum (10, 25) unter Verbindung der Kanten (15) des Endes zusammengepresst werden, eine Füllung (17) eingebracht wird, und dann das andere Ende unter Verbindung der Kanten (19) des anderen Endes zusammengepresst wird, um einen Kissen-förmigen Behälter (10) zu ergeben.

6. Verfahren nach Anspruch 5, **dadurch gekennzeichnet, daß** die Füllung mittels eines mit einem Index versehenen Beschickungsverfahren eingebracht wird, wobei eine abgemessene Menge an Füllmaterial (17) über das offene Ende eines kleinen Bereichs des temporär flexiblen, mit einem Hohlraum versehenen Produktes (10, 25) eingebracht wird.

7. Verfahren nach Anspruch 6, **dadurch gekennzeichnet, daß** ein Stab (12), der an einem mit einem Index versehenen Rad angebracht ist, in das hohle Produkt (10, 25) bei dessen Extrusion eingebracht wird, welches dann, wenn es genau die richtige Länge aufweist, zusammengepresst und an dessen stromaufwärts gelegenen Ende geschnitten wird, um einen Verschluss (15) zu ergeben, wobei sich das mit einem Index versehene Rad um 90 ° dreht, wobei der daran angebrachte Stab das geschnittene und verschlossene hohle Produkt (10) dreht und auf ein Förderband (16) gibt, so dass dessen offenes Ende nach oben zeigt, wobei das hohle Produkt mit der Füllung (17) versehen wird und dann an dessen oberen Ende unter Bildung eines Verschlusses (19) zusammengepresst wird.

8. Verfahren nach Anspruch 5, **dadurch gekennzeichnet, daß** die Füllung durch ein kontinuierliches Ko-Extrusionsverfahren eingebracht wird, wobei das temporär flexible, mit einem Hohlraum versehen Produkt (10, 25) bei der Extrusion kontinuierlich gefüllt wird.

9. Verfahren nach Anspruch 4, **dadurch gekennzeichnet, daß** das Drücken oder Zusammenpressen des temporär flexiblen, mit einem Hohlraum versehenen, extrudierten Produktes (10, 25) nicht nur die Kanten (15, 27, 33) des fertigen Produktes vereinigt, sondern dieses auch abtrennt.

10. Verfahren nach Anspruch 9, **dadurch gekennzeichnet, daß** das Drücken oder Zusammenpressen durch ein Guillotine-Verfahren erreicht wird, bei dem gegenüberliegende Schneiden in einer Scheren-ähnlichen Art und Weise aneinander vorbei gleiten und damit durch das Produkt (10, 25) schneiden.

11. Verfahren nach Anspruch 10, **dadurch gekennzeichnet, daß** das Drücken oder Zusammenpressen durch ein Verfahren erreicht wird, bei dem sich gegenüberliegende Schneiden an einem Punkt treffen.

12. Verfahren nach Anspruch 9, **dadurch gekennzeichnet, daß** das Drücken oder Zusammenpressen durch ein geschlossenes Zusammepress-Verfahren erreicht wird, bei dem zwei Rollen in das temporär flexible, mit einem Hohlraum versehene Produkt (10, 25) gestossen werden, bis sie aufeinander treffen, wobei Abtrennung bewirkt wird.

13. Verfahren nach Anspruch 4, **dadurch gekennzeichnet, daß** ein Ende des temporär flexiblen, mit einem Hohlraum versehenen, extrudierten Produkts (10, 25) unter Verbindung der Kanten (27, 33) des Endes zusammengepresst werden, wobei eine Füllung eingebracht wird und dann das andere Ende (28, 34) zusammengepresst wird, um die Kanten des anderen Endes in einem Winkel von 90 ° zu der ersten zusammengepressten Verbindung zu vereinen, um einen tetraederförmigen Behälter zu ergeben.

14. Verfahren nach Anspruch 13, **dadurch gekennzeichnet, daß** das Zusammenpressen der beiden Enden des extrudierten Produkts (10, 25) mittels zwei Sätzen an Backen (23, 24, 29, 30) durchgeführt wird, wobei ein Satz im rechten Winkel zu dem anderen Satz angeordnet ist.

15. Verfahren nach Anspruch 4, **dadurch gekennzeichnet, daß** die vereinigten Kanten (15, 16, 27, 28, 33, 34) der temporär flexiblen Lage oder des mit einem Hohlraum versehenen Produktes (10, 25) mit flüssiger Schokolade verschlossn werden.

## Revendications

1. Sac, sachet ou réceptacle similaire comportant un ou plusieurs bords soudés par sertissage (15, 27, 33), **caractérisé en ce qu'**il est constitué en chocolat ou en un substitut de chocolat.

2. Sac, sachet ou réceptacle similaire selon la revendication 1, **caractérisé en ce qu'**il a la forme d'un oreiller ou d'un polyèdre.

3. Sac, sachet ou réceptacle similaire selon la revendication 1, **caractérisé en ce que** la longueur est comprise entre 10 et 1 000 mm, la largeur est comprise entre 5 et 100 mm, et l'épaisseur de la paroi est comprise entre 0,25 et 10 mm.

4. Procédé de fabrication d'un sac, sachet ou réceptacle similaire comportant un ou plusieurs bords soudés par sertissage (15, 27, 33) constitué en chocolat ou en un substitut de chocolat qui comprend les opérations consistant à extruder un chocolat ou un substitut de chocolat en une forme creuse ou de feuille (10, 25) à travers une filière (11) à une température à laquelle le chocolat ou le substitut de chocolat (10, 25) est sous une forme solide ou semi-solide non coulante ou non fluide d'un bout à l'autre de l'extrusion et de manière que le produit extrudé ait une flexibilité ou une plasticité provisoire, **caractérisé en ce que** durant la période de flexibilité provisoire, le chocolat ou le substitut de chocolat extrudé (10, 25) est soudé par sertissage en pinçant ou pressant les faces d'un produit extrudé profilé creux transversalement à son axe longitudinal pour former des bords unis sertis (15, 27, 33) ou en pinçant ou pressant les bords adjacents de deux feuilles parallèles de produit extrudé ou en pinçant ou pressant les bords adjacents d'une feuille pliée de produit extrudé.

5. Procédé selon la revendication 4, **caractérisé en ce qu'**une extrémité d'un produit extrudé profilé creux provisoirement flexible (10, 25) est sertie pour unir les bords (15) de ladite extrémité, un fourrage (17) est introduit puis l'autre extrémité est sertie pour unir les bords (19) de l'autre extrémité afin d'obtenir un réceptacle en forme d'oreiller (10).

6. Procédé selon la revendication 5, **caractérisé en ce que** le fourrage est introduit par un procédé de distribution indexée dans lequel une quantité mesurée de fourrage (17) est injectée via l'extrémité ouverte d'une petite section du produit profilé creux provisoirement flexible (10, 25).

7. Procédé selon la revendication 6, **caractérisé en ce qu'**une barre (12) positionnée sur une roue indexée est introduite dans le produit creux (10, 25) tandis qu'il est extrudé, lequel produit, lorsqu'il atteint la longueur exacte, est serti et coupé à son extrémité d'amont pour produire une soudure (15), la roue indexée tourne sur 90°, ladite barre, positionnée sur la roue, amène la longueur sertie et coupée de produit creux (10) à tourner et tomber de la barre sur un transporteur (16) avec son extrémité ouverte donnant vers le haut, après quoi le produit creux est rempli du fourrage (17) puis serti à son bord supérieur pour produire une soudure (19).

8. Procédé selon la revendication 5, **caractérisé en ce que** le fourrage est introduit par un procédé d'extrusion conjointe continue dans lequel le produit profilé creux provisoirement flexible (10, 25) est rempli en continu tandis qu'il est extrudé.

9. Procédé selon la revendication 4, **caractérisé en ce que** l'action de pincement ou de pression du produit profilé creux provisoirement flexible (10, 25) non seulement unit les bords (15, 27, 33) du produit fini mais détache le produit en le tranchant.

10. Procédé selon la revendication 9, **caractérisé en ce que** l'action de pincement ou de pression est réalisée par un procédé de guillotine dans lequel des lames opposées passent à la manière de ciseaux et donc coupent à travers le produit (10, 25).

11. Procédé selon la revendication 10, **caractérisé en ce que** l'action de pincement ou de pression est réalisée par un procédé dans lequel les lames opposées se rencontrent en un point.

12. Procédé selon la revendication 9, **caractérisé en ce que** l'action de pincement ou de pression est réalisée par un procédé de sertissage fermé dans lequel deux rouleaux sont poussés dans le produit profilé creux provisoirement flexible (10, 25) jusqu'à ce qu'ils se rencontrent pour provoquer une séparation.

13. Procédé selon la revendication 4, **caractérisé en ce qu'**une extrémité d'un produit profilé creux provisoirement flexible (10, 25) est sertie pour unir les bords (27, 33) de ladite extrémité, un fourrage est introduit puis l'autre extrémité (28, 34) est sertie pour unir les bords de l'autre extrémité à un angle de 90° par rapport à la première soudure sertie pour obtenir un réceptacle en forme de tétraèdre (25).

14. Procédé selon la revendication 13, **caractérisé en ce que** le sertissage des deux extrémités du produit extrudé (10, 25) est réalisé par deux jeux de mâchoires (23, 24, 29, 30), un jeu positionné perpendiculairement à l'autre jeu.

15. Procédé selon la revendication 4, **caractérisé en ce que** les bords unis (15, 16, 27, 28, 33, 34) du produit profilé creux ou en feuille provisoirement flexible (10, 25) sont soudés avec un chocolat liquide.
